# FASCICULE DE BREVET EUROPEEN

(11) **EP 1 113 919 B1**
(45) Date de publication et mention de la délivrance du brevet: **26.11.2003**
(21) Numéro de dépôt: 99969061.3
(22) Date de dépôt: 13.09.1999
(51) Int. Cl.: B29D 30/00, B66C 1/54, B29D 30/20

(54) **DISPOSITIF DE SUSPENSION DE CARCASSES DE PNEUMATIQUES**
VORRICHTUNG ZUM HALTEN EINER REIFENKARKASSE
TYRE CASING HOLDING DEVICE

(30) Priorité: 14.09.1998 FR 9811465
(43) Date de publication de la demande: 11.07.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: BAGNASCO, Angelo, Magliano Alpi 12060-CN (IT)
(74) Mandataire: Cohen, Sylvia
(86) Numéro de dépôt international: EP9906750
(87) Numéro de publication internationale: WO00015422

(56) Documents cités:
- FR-A- 2 116 290
- FR-A- 2 271 920
- US-A- 2 517 889
- US-A- 3 219 510
- US-A- 3 393 807
- US-A- 4 637 644
- US-A- 5 395 150
- PATENT ABSTRACTS OF JAPAN vol. 007, no. 230 (M-249), 12 octobre 1983 (1983-10-12) -& JP 58 122841 A (KOBE SEIKOSHO KK), 21 juillet 1983 (1983-07-21)

## Description

La présente invention a pour objet un dispositif de suspension de carcasses de pneumatiques; plus précisément, l'invention concerne un dispositif de suspension pour le maintien des carcasses crues au cours de la fabrication des pneumatiques en conservant leur axe sensiblement vertical. Dans la suite, on désignera ce type de suspension par l'expression « suspension verticale ». L'invention concerne également un procédé de confection de pneumatique utilisant ledit dispositif.

On sait que la fabrication actuelle des pneumatiques à carcasse radiale peut s'effectuer en plusieurs étapes: tout d'abord, sur une machine dite "de première étape" ou encore dite "de confection", on construit la carcasse proprement dite à partir de tringles et d'un cylindre de gommes crues que l'on conforme pour le rendre toroïdal; puis sur une machine dite "de deuxième étape" ou encore dite "de finition", on applique sur cette carcasse une armature de sommet cylindrique, ou ceinture, et une bande de roulement; enfin, on vulcanise l'ensemble dans un moule.

Dans ce mode de fabrication, entre les deux étapes principales décrites ci-dessus, il faut stocker ou éventuellement transporter la carcasse crue de la machine de confection à la machine de finition, dans un état où elle est très déformable, puisque le caoutchouc est à l'état plastique, non vulcanisé. Autrefois, on accrochait les carcasses à des potences, l'axe des carcasses étant horizontal, mais, sous l'effet de leur propre poids, elles se déformaient en ovale ; ensuite, on a posé les carcasses à plat, leur axe étant vertical. Mais avec l'augmentation de la masse des pneumatiques, on a constaté l'affaissement du flanc supérieur.

On a donc imaginé des dispositifs pour éviter ces déformations. Ainsi le brevet US 4 452 655 décrit un moyen de support d'une carcasse de pneumatique crue comprenant deux bourrelets, avec son axe vertical. Ce moyen de support de forme elliptique comprend quatre plaques verticales capables d'accepter une certaine flexion élastique leur permettant.de s'engager sous le bourrelet supérieur pour maintenir la carcasse, les plaques étant réparties sur les deux petits arcs de l'ellipse.

Le maintien de la carcasse sur le support est ainsi réalisé par l'appui des plaques sur ladite carcasse en dessous du bourrelet supérieur, la carcasse s'opposant à une extension radiale des plaques. Les forces de poussée qui s'exercent sur la carcasse, irrégulièrement réparties sur la circonférence de la carcasse du fait de la forme elliptique du moyen de support, risquent de provoquer des déformations de la carcasse.

De plus, le moyen de support afin d'accepter des carcasses de dimensions différentes, se sert de la flexibilité des plaques, ce qui signifie que les carcasses de plus faibles dimensions subissent des efforts plus importants et donc des risques de déformation plus grands. Pour éviter ce phénomène, chaque dimension de pneumatique nécessite une taille correspondante du dispositif qui n'est donc plus multidimensionnelle.

Enfin, l'opération de déchargement de la carcasse est compliquée, et ne peut pas être automatisée. En effet, il faut déplacer la carcasse transversalement et la basculer pour dégager un de ses côtés, puis la ramener en sens contraire pour dégager l'autre côté et libérer ainsi cette carcasse tout entière.

Notons que l'on désigne par "carcasse" l'ébauche crue telle qu'elle résulte des opérations effectuées selon la première étape.

Le document US-3 393 807 décrit un support comprenant des dispositifs de suspension de pneumatiques crus avec l'axe des pneumatiques sensiblement vertical, chaque dispositif de suspension comprenant un bras de maintien des pneumatiques crus par leur bourrelet supérieur, ce bras pouvant avoir un mouvement longitudinal télescopique actionné par un ressort dont la course est limitée par un système goupille-rainure.

La présente invention vise à pallier l'ensemble de ces inconvénients.

Pour ce faire, l'invention propose un dispositif de suspension sensiblement verticale de carcasses de pneumatiques, comprenant une pluralité de supports répartis autour d'un axe de sustentation XX', montés sur un plateau de manutention et susceptibles de prendre appui à l'intérieur d'une carcasse de pneumatique, les supports étant mobiles radialement par rapport à l'axe de suspension entre au moins une position rétractée de chargement/déchargement de la carcasse et au moins une position écartée de maintien de la carcasse, ledit dispositif comportant un système à au moins un ressort exerçant une force d'expansion radiale sur les supports, cette expansion étant susceptible d'être limitée par une butée limitant la course radiale des supports, caractérisé en ce que la butée est disposée sur un levier d'actionnement.

Un tel dispositif permet de limiter la force radiale exercée sur les carcasses. Cela permet d'optimiser l'uniformité du pneu. Les étapes de chargement et déchargement de la carcasse sont particulièrement aisées à réaliser et se prêtent bien à l'automatisation.
La limitation de l'expansion des bras et la forme des supports permettent la mise en place de la carcasse et plus précisément de laisser le bourrelet supérieur de la carcasse, cette dernière étant présentée avec son axe vertical, passer au dessus des supports afin de le positionner sans que le bourrelet ne subisse lors de ce passage l'effort exercé par le ressort. La mise en place de la carcasse dégageant alors la butée, les supports peuvent venir en appui sur la carcasse sous le bourrelet supérieur.
Le levier d'actionnement portant la butée est susceptible d'être actionné, aux fins du dégagement de ladite butée, par la mise en place de la carcasse à suspendre sur le dispositif.

Cet agencement avec le levier facilite grandement la mise en place de la carcasse puisque le passage des supports à la position écartée de maintien de la carcasse est commandée automatiquement par la seule mise en place de la carcasse.

La course radiale des supports permise par ladite butée est de préférence réglable, le réglage de la course s'effectuant en modifiant la distance de la butée par rapport à l'axe de sustentation XX'.

Cette caractéristique permet de suspendre des carcasses de différentes dimensions sur le même dispositif. L'opérateur n'a qu'à ajuster la distance d'écartement des supports en fonction du diamètre de la carcasse à suspendre.

Par ailleurs, la tension du ressort est avantageusement réglable.

Ainsi, la force subie par la carcasse est ajustée, selon le type de produit en fabrication et de ses dimensions, de façon à assurer l'intégrité de la carcasse. On peut de la sorte prévoir que la force d'expansion s'exerçant sur les supports soit sensiblement la même quelle que soit la dimension de la carcasse à suspendre.

De manière avantageuse, les supports sont répartis régulièrement par rapport à l'axe vertical et comprennent respectivement une surface d'appui destinées à être au contact de la carcasse à suspendre, l'enveloppe de ces surfaces d'appui constituant une surface sensiblement cylindrique. Ainsi les efforts exercés par les supports sur la carcasse à suspendre, sont répartis sensiblement uniformément sur la circonférence de cette dernière.

Selon une variante avantageuse, les déplacements radiaux des supports sont commandés par au moins une bielle articulée d'une part sur les supports et, d'autre part, sur une bague coulissant suivant l'axe de suspension XX'. II est alors possible de prévoir un vérin permettant de rapprocher les supports de l'axe de suspension XX' en déplaçant la bague.

Une telle variante se prête particulièrement bien à l'automatisation.

Selon un autre aspect de la présente invention, il est prévu un dispositif de suspension sensiblement verticale de carcasses de pneumatiques, comprenant un ensemble muni d'au moins deux supports, répartis autour d'un axe de sustentation X-X', montés sur un plateau de manutention et susceptibles de prendre appui à l'intérieur d'une carcasse de pneumatique, les supports étant mobiles radialement par rapport à l'axe de sustentation entre au moins une position rétractée de chargement/déchargement de la carcasse et au moins une position écartée de maintien de la carcasse, chacun des supports étant associé à un bras coulissant à crémaillère coopérant avec une roue dentée portée par le plateau de manutention, ladite roue coordonnant les mouvements de translation desdits bras de manière à les écarter ou à les rapprocher de l'axe de sustentation XX' simultanément.

Un tel agencement permet d'utiliser par exemple un seul ressort pouvant agir sur deux, quatre, ou même plus, supports. Bien qu'il soit avantageux d'agencer les supports par paires, il est aussi possible d'utiliser un nombre impair de supports. Ceux-ci sont alors de préférence répartis uniformément autour de l'axe de suspension.

Selon un autre aspect, l'invention prévoit également un procédé de confection de pneumatique consistant à:
- effectuer une première étape consistant à réaliser une carcasse;
- disposer ladite carcasse sur un dispositif de suspension à supports mobiles sur lequel lesdits supports ont été préalablement positionnés en position rétractée;
- positionner lesdits supports en position écartée, contre les parois internes de la carcasse;
- dégager ladite carcasse dudit dispositif de suspension en positionnant lesdits supports du dispositif en position rétractée;
- effectuer une seconde étape consistant à disposer sur ladite carcasse au moins les éléments de finition afin d'obtenir une enveloppe;
- vulcaniser ladite enveloppe ainsi obtenue,
caractérisé en ce que le maintien en position rétractée des supports s'effectue en actionnant une butée.

Ce procédé est particulièrement avantageux puisqu'il permet d'optimiser l'uniformité du pneu. La mobilité radiale des supports permet de placer et de retirer la carcasse de façon très simple, peu coûteuse et ergonomique. Le rapprochement simultané des bras permet, en effet, d'atteindre une position escamotée des bras dans laquelle ces derniers ne sont plus au contact de la carcasse, ce qui autorise un chargement et /ou un déchargement aisé et simple de ladite carcasse.

Ce procédé se prête par ailleurs bien à l'automatisation.

Afin que le dispositif de suspension soit multidimensionnel, la distance radiale de la butée du levier à l'axe vertical est réglable suivant la dimension de la carcasse à suspendre.

D'autres caractéristiques et avantages de l'invention apparaîtront à la lecture de deux exemples de réalisation de dispositif de suspension de carcasses de pneumatique conformes à l'invention, donnés à titre non limitatif, en se référant au dessin annexé sur lequel :
- la figure 1 est une vue en coupe horizontale du dispositif dans sa variante à crémaillères ;
- la figure 2 est une vue en élévation-coupe du dispositif de la figure 1 ;

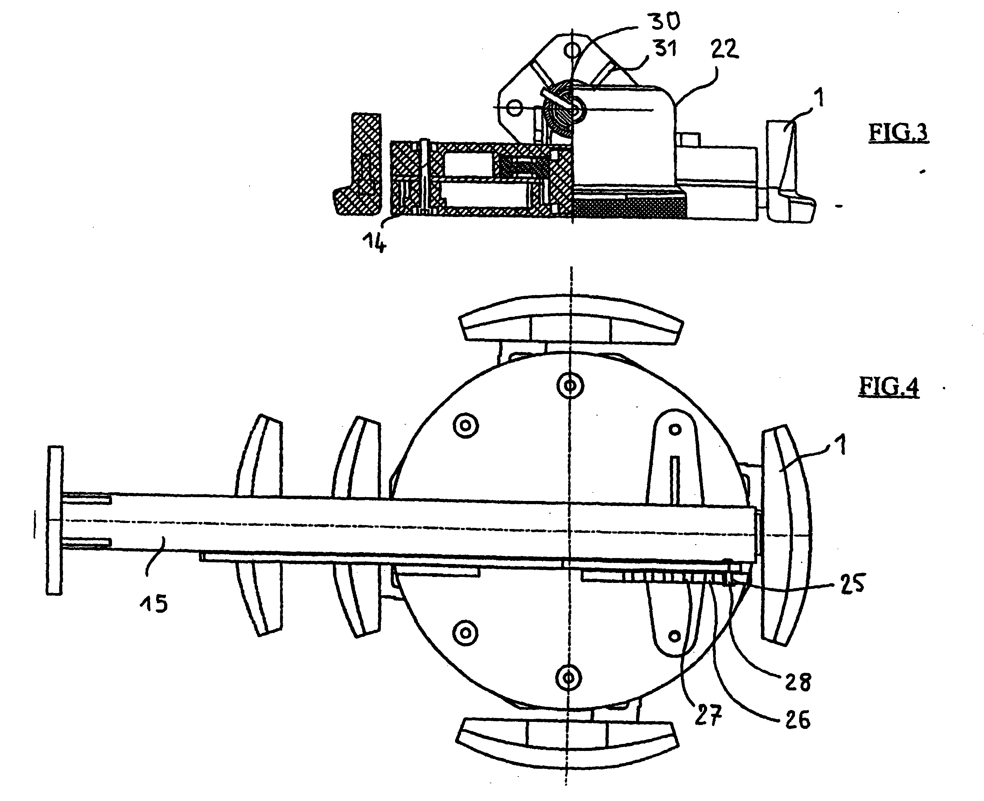

- la figure 3 est une vue de côté en coupe partielle du même dispositif ;
- la figure 4 est une vue de dessus du même dispositif ;
- la figure 5 est une vue en élévation du dispositif dans sa variante à biellettes ;
- la figure 6 est une vue de dessus en coupe partielle du dispositif de la figure 5 .

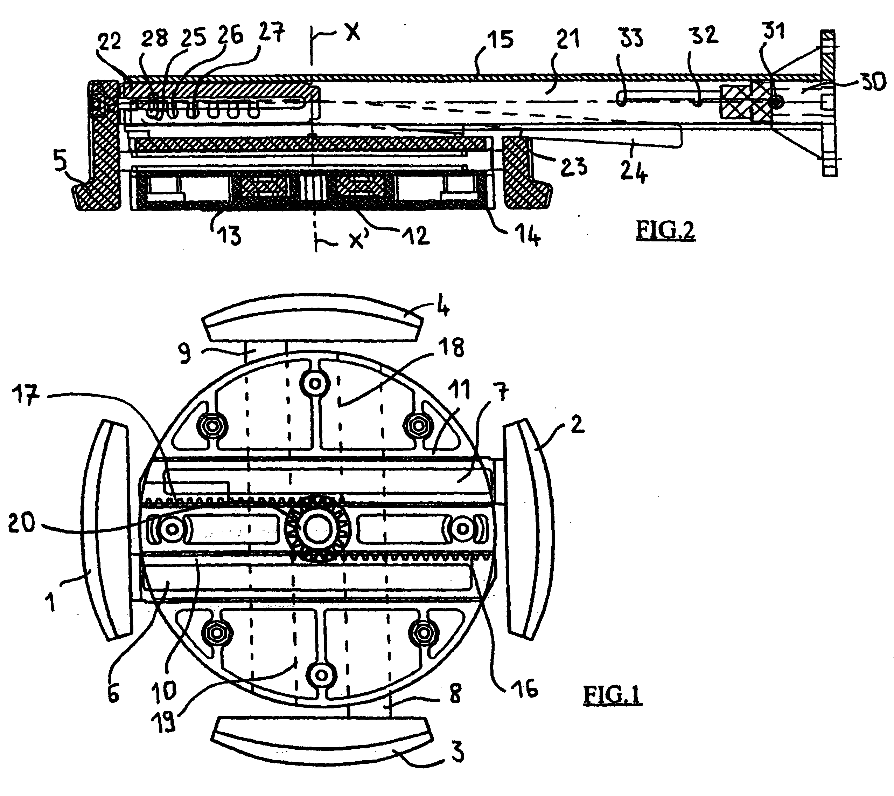

Selon la figure 1, le dispositif de suspension comprend quatre supports sous forme de patins rigides 1, 2, 3 et 4 dont la surface extérieure est cylindrique à axe vertical; destinés à servir de supports pour une carcasse de pneumatique crue (non représentée) disposée avec son axe vertical. Pour cela, chaque patin comporte un rebord en saillie, tel que 5 (fig. 2), qui se positionne sous un bourrelet de la carcasse à suspendre, que l'on nommera le bourrelet supérieur, la carcasse étant présenté avec son axe vertical. Afin de coïncider avec la forme de la carcasse, l'enveloppe des surfaces extérieures des patins 1, 2, 3, 4 constituent une surface sensiblement cylindrique. L'axe vertical de suspension est désigné par XX'.

Suivant l'invention, chaque patin est solidaire d'un bras 6, 7, 8 et 9, pouvant se déplacer dans une glissière, seules les glissières 10 et 11 coopérant avec les bras 6 et 7 sont représentées, pratiquée dans un plateau de manutention rigide 14. Ce plateau est fixé horizontalement sous une potence 15. Cette potence fait partie d'un convoyeur de type connu, non représenté. Dans une première variante de l'invention, chaque bras comporte une crémaillère 16, 17, 18 et 19 qui engrène avec une roue dentée axiale 20.

Un ressort 21 monté comprimé dans la potence 15 exerce une force d'expansion sur le patin 1 par l'intermédiaire d'une extension 22 de ce dernier; cette force transmise par le bras 6 à la roue dentée 20 s'exerce ainsi sur l'ensemble des bras 6, 7, 8, 9 et tend à les écarter radialement. Cette expansion est arrêtée par une butée formée par un épaulement 23 d'un levier mobile 24 qui bloque le déplacement radial du patin 2, et donc de l'ensemble des patins.

Lorsque la carcasse crue est présentée, légèrement inclinée par rapport à la position dans laquelle son axe est vertical, sous la potence, elle commence par repousser un des patins, et donc tous les autres, vers l'axe XX', dans une position escamotée, puis en montant la carcasse verticalement, cette dernière soulève le levier 24, ce qui dégage la butée 23 par rapport au patin 2; cela permet aux quatre patins de s'écarter radialement simultanément et de venir s'appuyer à l'intérieur de la carcasse, sous son bourrelet supérieur, ou, de préférence, au niveau du renfort de l'armature de ce bourrelet.

L'invention permet d'adapter facilement le dispositif à différentes dimensions de carcasses ; pour cela, la distance radiale de la butée 23 à l'axe vertical XX' peut être modifiée en déplaçant le point d'articulation du levier 24; à cet effet, des gorges 25, 26, 27, etc... prévues dans l'extrémité de la potence 15 permettent de recevoir un téton 28 solidaire du levier 24 qui constitue l'axe de rotation du levier 24. Ce téton 28 est engagé dans celle des gorges qui permet d'obtenir la distance radiale entre la butée 23 et l'axe XX' correspondant à l'extension voulue de l'ensemble des patins.

De même, la position du ressort 21 peut être réglée suivant la dimension de la carcasse; pour cela, un bouchon d'extrémité 30 porte une goupille 31 qui peut être engagée dans des gorges 32, 33 de la potence 15, et permettre ainsi à l'élongation du ressort 21 de s'exercer correctement. Ainsi, on peut régler, en fonction de la dimension de la carcasse, petite ou grande, la force qu'exerce sur celle-ci le ressort 21 par l'intermédiaire des patins 1, 2, 3, 4.

Pour décharger la carcasse, il suffit de repousser manuellement un des patins ou de prévoir un organe d'actionnement (non représenté) agissant manuellement ou de façon motorisée sur un desdits patins, afin de rappeler ce patin dans sa position initiale, les patins 1, 2, 3 et 4 étant alors rappelés en position escamotée. La carcasse peut donc être dégagée du dispositif de suspension sans aucune difficulté, son déchargement entraînant, par ailleurs, l'abaissement du levier 24 dont l'épaulement 23 bloque à nouveau l'expansion radiale des patins 1, 2, 3 et 4 en coopérant avec le patin 2.

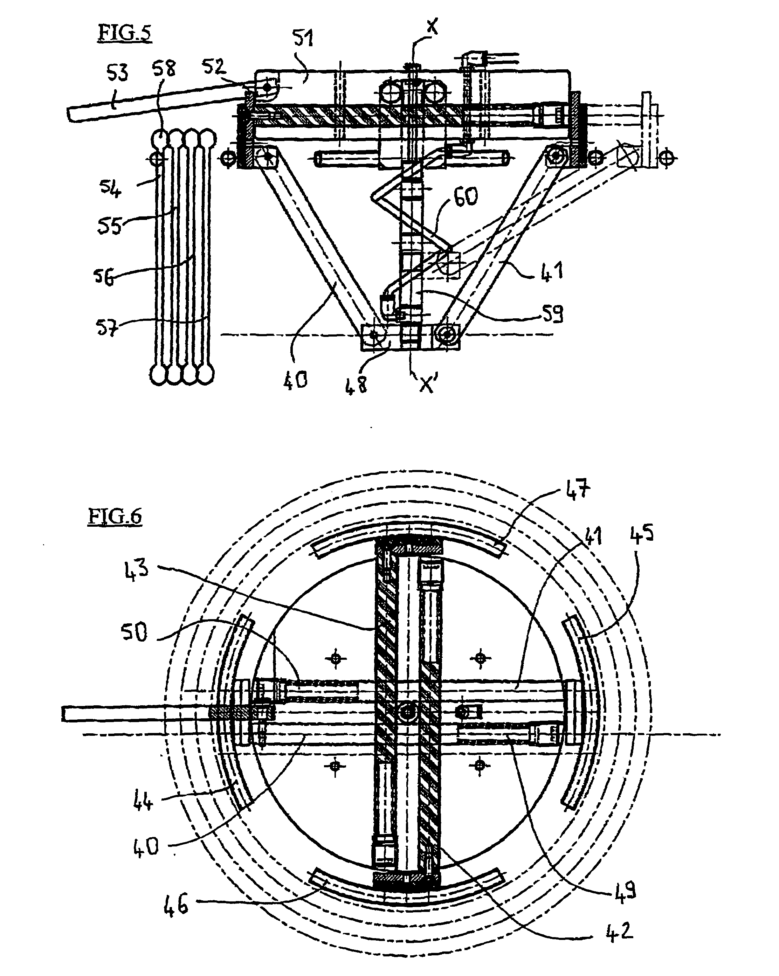

Dans une autre variante de l'invention, représentée sur les figures 5 et 6, les moyens mécaniques pour coordonner les mouvements des bras dans leurs glissières sont constitués par des bielles 40, 41, 42 et 43 dont les extrémités supérieures sont articulées sur les patins de support de la carcasse 44, 45, 46 et 47, tandis que leurs extrémités inférieures sont articulées sur une bague 48 qui peut coulisser suivant l'axe vertical XX'.

L'expansion radiale coordonnée des quatre patins est commandée par quatre ressorts de compression, tels que 49 et 50, montés dans un plateau de manutention rigide 51 ; cette expansion est limitée par une butée 52 formée par un épaulement d'un levier 53 ; ce dernier est soulevé par la montée de la carcasse crue à suspendre, ce qui a pour effet de dégager l'épaulement 52 par rapport au patin 44. On voit sur la moitié droite de la figure 5, la position écartée des patins et des bielles, représentée en traits mixtes.

Sur la moitié gauche de la figure 5, on voit quatre carcasses 54, 55, 56 et 57 ayant des diamètres différents, par exemple 13, 14, 15 et 16 pouces. Bien entendu, ces exemples ne sont donnés qu'à titre d'illustration et ne sauraient limiter la portée de l'invention à ces écarts de dimensions. Suivant l'invention, l'expansion simultanée des quatre patins 44, 45, 46 et 47 sous le bourrelet supérieur 58 de la carcasse présentée en montant, permet de la suspendre sans la déformer, avec son axe vertical.

Un vérin hydraulique ou pneumatique 59 alimenté par un tube flexible 60 permet de ramener l'ensemble des patins et des bielles dans leurs positions escamotées, en faisant redescendre la bague 48, et en comprimant les quatre ressorts qui commandent l'expansion des patins. La carcasse peut donc être aisément déchargée du dispositif de suspension.

Bien entendu, cette opération de remise en position escamotée peut être effectuée à la main dans une version simplifiée de l'invention : il suffit de tirer la bague 48 vers le bas jusqu'à ce que le patin 44 revienne en butée sous l'épaulement 52 du levier 53.

## Revendications

1. Dispositif de suspension sensiblement verticale de carcasses de pneumatiques, comprenant une pluralité de supports (1-4; 44-47) répartis autour d'un axe de sustentation XX', montés sur un plateau de manutention (14) et susceptibles de prendre appui à l'intérieur d'une carcasse de pneumatique, les supports (1-4; 44-47) étant mobiles radialement par rapport à l'axe de sustentation entre au moins une position rétractée de chargement/déchargement de la carcasse et au moins une position écartée de maintien de la carcasse, ledit dispositif comportant un système à au moins un ressort (21, 49-50) exerçant une force d'expansion radiale sur les supports (1-4; 44-47), cette expansion étant susceptible d'être limitée par une butée (23,52) limitant la course radiale des supports (1-4; 44-47). **caractérisé en ce que** la butée (23, 52) est disposée sur un levier d'actionnement (24, 53).

2. Dispositif de suspension sensiblement verticale de carcasses de pneumatiques selon la revendication 1, dans lequel ledit levier d'actionnement (24, 53) est susceptible d'être actionné, aux fins du dégagement de ladite butée (23, 52), par la mise en place de la carcasse à suspendre sur le dispositif.

3. Dispositif de suspension sensiblement verticale de carcasses de pneumatiques selon l'une des revendications précédentes, dans lequel la course radiale des supports (1-4; 44-47) permise par ladite butée (23, 52) est réglable.

4. Dispositif de suspension sensiblement verticale de carcasses de pneumatiques selon la revendication 3, dans lequel le réglage de la course s'effectue en modifiant la distance de la butée (23, 52) par rapport à l'axe de sustentation XX'.

5. Dispositif de suspension sensiblement verticale de carcasses de pneumatiques selon l'une des revendications précédentes, dans lequel la tension du ressort (21, 49-50) est réglable.

6. Dispositif de suspension sensiblement verticale de carcasses de pneumatiques selon l'une des revendications précédentes, comportant un ensemble d'au moins quatre supports (1-4) chacun étant associé à un bras (6-9) coulissant à crémaillère (16-19), coopérant avec une roue dentée (20) portée par le plateau de manutention (14), ladite roue (20) coordonnant les mouvements de translation des bras (6-9) de manière à les écarter ou à les rapprocher de l'axe de sustentation XX' simultanément.

7. Dispositif de suspension sensiblement verticale de carcasses de pneumatiques selon l'une des revendications 1 ou 2, dans lequel les déplacements radiaux des supports (44-47) sont commandés par au moins une bielle (40-43) articulée d'une part sur les supports (44-47) et, d'autre part, sur une bague (48) coulissant suivant l'axe de sustentation XX'.

8. Dispositif de suspension sensiblement verticale de carcasses de pneumatiques selon la revendication 7, dans lequel un vérin (59) permet de rapprocher les supports (44-47) de l'axe de sustentation XX' en déplaçant la bague (48).

9. Procédé de confection de pneumatique consistant à:
- effectuer une première étape consistant à réaliser une carcasse;
- disposer ladite carcasse sur un dispositif de suspension à supports (1-4; 44-47) mobiles sur lequel lesdits supports (1-4; 44-47) ont été préalablement positionnés en position rétractée;
- positionner lesdits supports (1-4; 44-47) en position écartée, contre les parois internes de la carcasse;
- dégager ladite carcasse dudit dispositif de suspension en positionnant lesdits supports (1-4; 44-47) du dispositif en position rétractée;
- effectuer une seconde étape consistant à disposer sur ladite carcasse au moins les éléments de finition afin d'obtenir une enveloppe;
- vulcaniser ladite enveloppe ainsi obtenue,
**caractérisé en ce que** le maintien en position rétractée des supports s'effectue en actionnant une butée (23, 52).

## Patentansprüche

1. Vorrichtung zur im wesentlichen vertikalen Aufhängung von Karkassen von Reifen, die eine Vielzahl von Trägern (1-4; 44-47) aufweist, die rund um eine Tragachse XX' verteilt sind, an einer Förderplatte (14) angebracht sind und dazu imstande sind, auf der Innenseite einer Reifenkarkasse anzugreifen, wobei die Träger (1-4; 44-47) radial bezüglich der Tragachse zwischen mindestens einer zurückgezogenen Lade-/ Entladeposition der Karkasse und mindestens einer ausgefahrenen Halteposition der Karkasse beweglich sind, wobei die genannte Vorrichtung ein System mit mindestens einer Feder (21, 49-50) aufweist, die eine radiale Aufweitkraft auf die Träger (1-4; 44-47) ausübt, und wobei diese Aufweitung imstande ist, durch einen Anschlag (23, 52) begrenzt zu werden, der den radialen Bewegungsweg der Träger (1-4; 44-47) begrenzt, **dadurch gekennzeichnet, daß** der Anschlag (23, 52) auf einem Betätigungshebel (24, 53) angeordnet ist.

2. Vorrichtung zur im wesentlichen vertikalen Aufhängung von Karkassen von Reifen nach Anspruch 1, worin der genannte Betätigungshebel (24, 53) imstande ist, an den Enden der Freisetzung des genannten Anschlags (23, 52) durch das Einsetzen der Karkasse beim Aufhängen an der Vorrichtung betätigt zu werden.

3. Vorrichtung zur im wesentlichen vertikalen Aufhängung von Karkassen von Reifen nach einem der vorangehenden Ansprüche, worin der radiale Bewegungsweg der Träger (1-4; 44-47), der durch den genannten Anschlag (23, 52) gestattet ist, einstellbar ist.

4. Vorrichtung zur im wesentlichen vertikalen Aufhängung von Karkassen von Reifen nach Anspruch 3, worin die Einstellung des Bewegungsweges dadurch bewirkt wird, daß man den Abstand des Anschlags (23, 52) bezüglich der Tragachse XX' ändert.

5. Vorrichtung zur im wesentlichen vertikalen Aufhängung von Karkassen von Reifen nach einem der vorangehenden Ansprüche, worin die Spannung der Feder (21, 49-50) einstellbar ist.

6. Vorrichtung zur im wesentlichen vertikalen Aufhängung von Karkassen von Reifen nach einem der vorangehenden Ansprüche, mit einer Gruppe von mindestens vier Trägern (1-4), von denen jeder einem Arm (6-9) zugeordnet ist, der an einer Zahn stange (16-19) gleitet, die mit einem Zahnrad (20) zusammenwirken, das von der Transportplatte (14) getragen ist, wobei das genannte Rad (20) die Translationsbewegungen der Arme (6-9) derart koordiniert, daß sie sich gleichzeitig von der Tragachse XX' entfernen oder sich an diese annähern.

7. Vorrichtung zur im wesentlichen vertikalen Aufhängung von Karkassen von Reifen nach einem der Ansprüche 1 oder 2, worin die radialen Versetzungen der Träger (44-47) durch mindestens eine Koppelstange (40-43) gesteuert werden, die einerseits an den Trägern (44-47) und andererseits an einem Ring (48) angelenkt sind, der längs der Tragachse XX' gleitet.

8. Vorrichtung zur im wesentlichen vertikalen Aufhängung von Karkassen von Reifen nach Anspruch 7, worin es ein Stellglied bzw. Zylinder (59) gestattet, die Träger (44-47) an die Tragachse XX' anzunähern, indem es bzw. er den Ring (48) versetzt.

9. Verfahren zur Reifenkonfektion, bestehend aus:
- dem Bewirken eines ersten Schrittes, der darin besteht, eine Karkasse herzustellen;
- dem Anordnen der genannten Karkasse auf einer Aufhängungsvorrichtung mit beweglichen Trägem (1-4; 44-47), auf welcher die genannten Träger (1-4; 44-47) vorab in einer zurückgezogenen Lage angeordnet wurden;
- dem Anordnen der genannten Träger (1-4; 44-47) in der ausgefahrenen Lage gegen die Innenwände der Karkasse hin;
- dem Lösen der genannten Karkasse von der genannten Aufhängungsvorrichtung, indem man die genannten Träger (1-4; 44-47) der Vorrichtung in der zurückgezogenen Lage anordnet;
- dem Bewirken eines zweiten Schrittes, der darin besteht, auf der genannten Karkasse mindestens die Elemente der Fertigstellung aufzubringen, um einen Mantel zu erhalten; und
- dem Vulkanisieren des genannten, so erhaltenen Mantels,
**dadurch gekennzeichnet, daß** das Halten der Träger in zurückgezogener Lage durch Betätigen eines Anschlags (23, 52) bewirkt wird.

## Claims

1. A device for the substantially vertical suspension of tyre carcasses, comprising a plurality of supports (1-4; 44-47) distributed about a lifting axis XX', which are mounted on a handling plate (14) and are able to bear on the inside of a tyre carcass, the supports (1-4; 44-47) being mobile radially relative to the suspension axis between at least one retracted loading/unloading position for the carcass and at least one spread-apart holding position for the carcass, said device comprising a system having at least one spring (21, 49-50) which exerts a radial expansion force on the supports (1-4; 44-47), this expansion being able to be limited by a stop (23, 52) which limits the radial stroke of the supports (1-4; 44-47), **characterised in that** the stop (23, 52) is arranged on an actuating lever (24, 53).

2. A device for the substantially vertical suspension of tyre carcasses according to Claim 1, in which said actuating lever (24, 53) is capable of being actuated, in order to disengage said stop (23, 52), by the putting in place of the carcass to be suspended on the device.

3. A device for the substantially vertical suspension of tyre carcasses according to one of the preceding claims, in which the radial stroke of the supports (1-4; 44-47) permitted by said stop (23, 52) is adjustable.

4. A device for the substantially vertical suspension of tyre carcasses according to Claim 3, in which the adjustment of the stroke is effected by modifying the distance of the stop (23, 52) relative to the lifting axis XX'.

5. A device for the substantially vertical suspension of tyre carcasses according to one of the preceding claims, in which the tension of the spring (21, 49-50) is adjustable.

6. A device for the substantially vertical suspension of tyre carcasses according to one of the preceding claims, comprising an assembly of at least four supports (1-4), each being associated with a sliding arm (6-9) with a rack (16-19), cooperating with a toothed wheel (20) borne by the handling plate (14), said wheel (20) coordinating the translational movements of the arms (6-9) so as to move them apart or to bring them towards the lifting axis XX' simultaneously.

7. A device for the substantially vertical suspension of tyre carcasses according to one of Claims 1 or 2, in which the radial displacements of the supports (44-47) are controlled by at least one connecting-rod (40-43) articulated on one hand to the supports (44-47) and, on the other hand, to a ring (48) which slides along the lifting axis XX'.

8. A device for the substantially vertical suspension of tyre carcasses according to Claim 7, in which a piston-cylinder unit (59) makes it possible to bring the supports (44-47) towards the lifting axis XX' by displacing the ring (48).

9. A process for building a tyre, consisting of:
- performing a first stage consisting of producing a carcass; I
- arranging said carcass on a suspension device having mobile supports (1-4; 44-47) on which said supports (1-4; 44-47) have been positioned beforehand in the retracted position;
- positioning said supports (1-4; 44-47) in the spread-apart position, against the inner walls of the carcass;
- disengaging said carcass from said suspension device by positioning said supports (1-4; 44-47) of the device in the retracted position;
- carrying out a second step consisting of arranging on said carcass at least the finishing elements in order to obtain a tyre;
- vulcanising said tyre which is thus obtained,
**characterised in that** the holding in the retracted position of the supports is effected by actuating a stop (23, 52).
